Europäisches Patentamt

European Patent Office

Office européen des brevets

(11) Numéro de publication: **0 365 437**
**A1**

## DEMANDE DE BREVET EUROPEEN

(21) Numéro de dépôt: **89420367.8**

(51) Int. Cl.⁵: **H01B 15/00**

(22) Date de dépôt: **26.09.89**

(30) Priorité: **21.10.88 FR 8814293**

(43) Date de publication de la demande:
**25.04.90 Bulletin 90/17**

(84) Etats contractants désignés:
**AT BE CH DE ES GB GR IT LI LU NL SE**

(71) Demandeur: **ADDAX (Sarl)**
**12 rue Ferdinand**
**F-42000 Saint Etienne(FR)**

(72) Inventeur: **Fara, Claude**
**91 Bis Avenue Irénée Laurent**
**F-42340 Veauche(FR)**

(74) Mandataire: **Dupuis, François**
**Cabinet Charras, 3 Place de l'Hôtel-de-Ville,**
**BP 203**
**F-42005 St. Etienne Cédex 1(FR)**

(54) **Dispositif de coupe perfectionné pour les machines à dénuder les câbles, notamment pour leur récupération.**

(57) Dispositif de coupe perfectionné pour les machines à dénuder les câbles, notamment pour leur récupération. Le dispositif est remarquable en ce qu'il comprend deux couteaux plats profilés et coudés (6), de grande longueur, disposés en avant de la machine, leur zône de coupe agissant sans le sens de défilement du câble, lesdits couteaux étant sollicités en écartement l'un par rapport à l'autre lors du défilement du câble, lesdits couteaux étant associés à des moyens de règlage dans le plan horizontal.

FIG.4

La présente invention a pour objet un dispositif de coupe perfectionné pour les machines à dénuder les câbles, notamment pour leur récupération.

On rappelle que les câbles électriques, téléphoniques, sont composés de plusieurs conducteurs, de matière isolante et de divers produits assurant une protection mécanique ou d'étanchéité. Certains matériaux constituants lesdits câbles présentent une valeur marchande, aussi il est intéressant de pouvoir procéder à leur récupération lorsque les câbles sont mis au rebut. A cet effet, des machines à dénuder les câbles ont été mises au point et ont pour objet de séparer par une ou plusieurs actions simultanées, la coupe en un ou plusieurs endroits de la section du câble pour permettre son dénudage.

La déposante a développé et mis au point par exemple, une machine à dénuder qui a fait l'objet du Brevet français 2.346.885 qu'elle exploite. Cette machine comprend au moins deux molettes solidaires des moyens d'entraînement pour tourner un sens contraire de façon à entraîner le câble pincé entre elles, le câble circulant ainsi entre un guide situé en amont des molettes et un dispositif de coupe comprenant un couteau situé en aval destiné à fendre le câble. Les molettes précitées sont montées dans des paliers prévus de façon que leurs axes restent toujours parallèles entre eux mais soient à écartement réglable entre eux de façon à s'adapter à des câbles de sections différentes. Ainsi selon les possibilités, soit la molette supérieure est fixe et la molette inférieure mobile, soit la molette supérieure est mobile et la molette inférieure fixe.

En cours d'exploitation du brevet précité, la déposante a constaté que si la machine fonctionnait parfaitement pour le dénudage de câbles de section supérieure à 15 millimètres environ, par contre pour les câbles de section moindre, et qui constituent une part importante des câbles de récupération, ceux-ci avaient tendance à s'écarter du plan de coupe et ripaient sous l'effet de serrage et d'entraînement des molettes vers le ou les outils de coupe.

Cet inconvénient préjudiciable était rencontré dans tous les matériels existants sur le marché, et en pratique les câbles de petit diamètre n'étaient pas dénudés et étaient laissés à l'abandon.

Dans le cadre de ses recherches, la déposante a alors mis au point de nouveaux perfectionnements objets du brevet français 2.574.225.

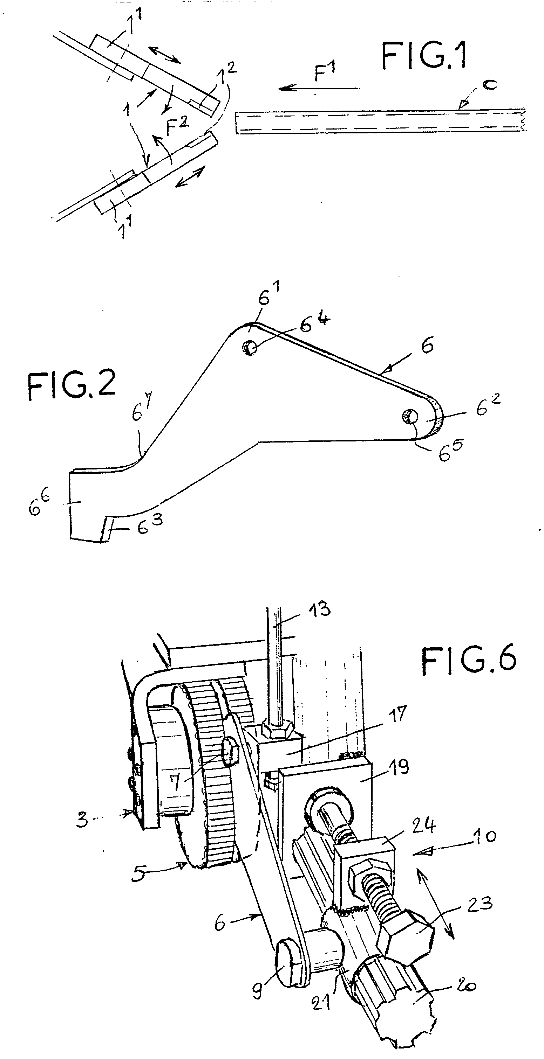

Dans cette mise en oeuvre, on utilise un dispositif de coupe illustré figure 1 de la présente Demande qui comprend deux couteaux effilés (1) disposés de part et d'autre du câble à dénuder. Ces couteaux sont montés fixes par des supports associés aux paliers de couples des molettes d'entraînement du câble et sont mobiles chacun avec le couple de molettes correspondantes, lesdits couteaux étant disposés entre les molettes. Les couteaux précités sont montés en arrière de la machine et en opposition au sens de défilement, selon la flèche F1, du câble à dénuder. Ces couteaux se présentent sous la forme d'une partie arrière profilée en forme de chape (1.1) se prolongeant par un profil méplat (1.2) constituant en bout la partie active de l'outil.

Un tel dispositif de coupe présente plusieurs inconvénients en particulier lors du dénudage des câbles de petite section. On constate tout d'abord que sous l'effet d'avancée du câble vers la zône de coupe, les couteaux ont tendance à pivoter axialement et se rapprocher l'un de l'autre, selon la flèche F2, en pénétrant plus profondément dans l'âme du câble, ce qui a tendance à freiner l'avancement du câble. De plus, la partie de câble dénudée en matière isolante s'évacuant par l'arrière de la machine, a tendance à s'enrouler sur elle-même et à venir en butée contre la base de chaque couteau et ainsi provoquer des bourrages par agglomération. Il est donc nécessaire d'intervenir et d'assurer un contrôle et un entretien périodique. A défaut, la machine peut fonctionner dans de mauvaises conditions, l'enveloppe du câble dénudé n'étant pas ou insuffisamment évacuée. En outre, ainsi qu'il apparaît aux dessins, le profil des couteaux est particulier, coûteux dans sa réalisation et fabrication. Ces couteaux sont de petite longueur et sont d'accès difficile.

L'objet de l'invention vise donc à remédier à ces inconvénients et résoudre les problèmes posés.

La solution apportée par l'invention est simple, économique, facile à mettre en oeuvre et propose une nouvelle conception des outils de coupe et de leur montage.

Selon une première caractéristique, le dispositif est remarquable en ce qu'il comprend deux couteaux plats profilés et coudés, de grande longueur, disposés en avant de la machine, leur zône de coupe agissant dans le sens de défilement du câble, lesdits couteaux étant sollicités en écartement l'un par rapport à l'autre lors du défilement du câble, lesdits couteaux étant associés à des moyens de réglage en hauteur et à des moyens de réglage dans le plan horizontal.

Ces caractéristiques et d'autres encore ressortiront bien de la suite de la description.

Pour fixer l'objet de l'invention illustré d'une manière non limitative aux figures des dessins où :

La figure 1 est une vue à caractère schématique du dispositif de coupe selon l'art antérieur.

La figure 2 est une vue en plan du couteau selon l'invention.

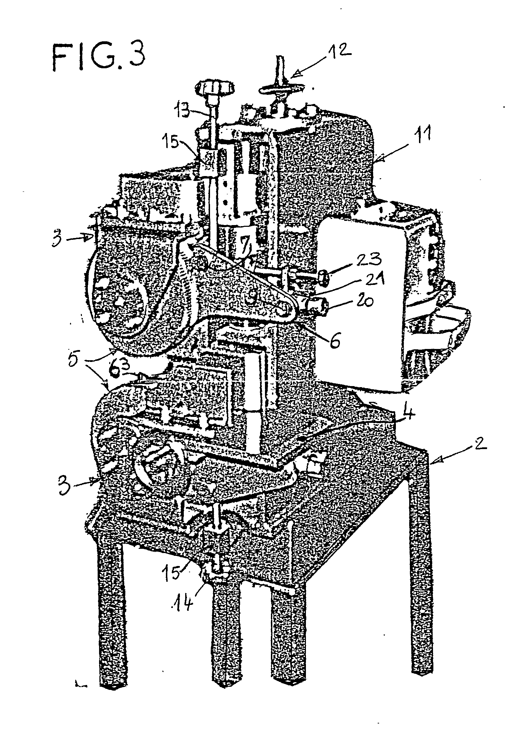

La figure 3 est une vue à caractère schématique de la machine à dénuder selon l'invention.

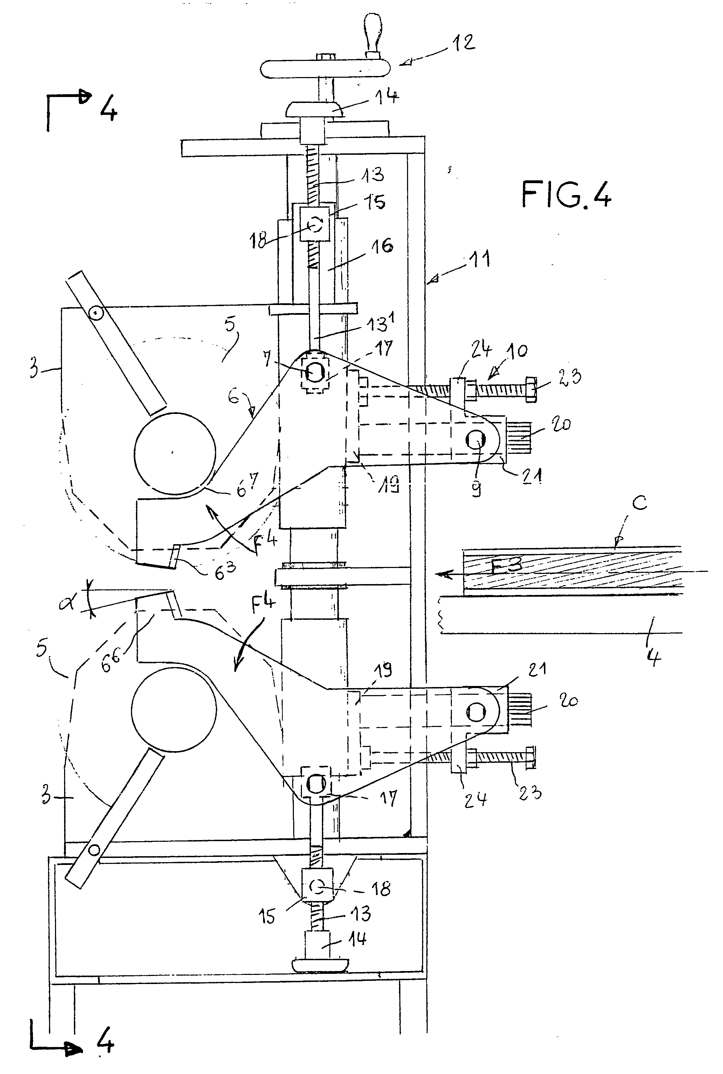

La figure 4 est une vue en coupe longitudinale selon la ligne V-V.

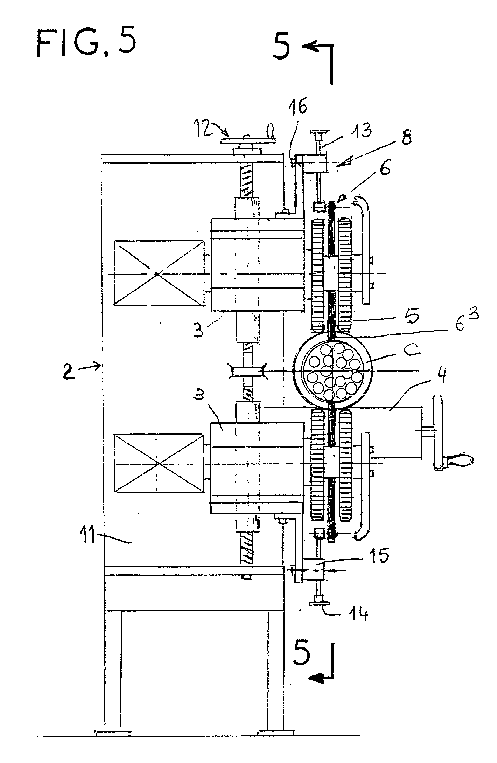

La figure 5 est une vue en coupe transversale selon ligne IV-IV.

La figure 6 est une vue en perspective partielle des moyens de réglage en position horizontale du couteau.

Afin de rendre plus concret l'objet de l'invention, on le décrit maintenant d'une manière non limitative en se référant aux exemples de réalisation des figures des dessins.

La machine à dénuder comprend und bâti support (2) profilé sur lequel sont montés les moyens supports (3) des molettes d'entraînement du câble à tirer (C), des moyens de guidage (4) du câble vers la zône de coupe, les moyens de réglage (12) d'écartement en position desdites molettes (5) en fonction de la section du câble à dénuder, les moyens moteurs de fonctionnement de la machine.

Les molettes d'entraînement du câble sont disposées par couple de deux, pour agir de part et d'autre du câble entraîné. Les moyens de guidage préalable du câble vers la zône de coupe peuvent être une glissière en V ou comme illustré de manière non limitative un étau fixé sur une base support du bâti, ledit étau pouvant avoir des mors amovibles.

Selon l'invention, on réalise un dispositif de coupe particulier comprenant deux couteaux profilés (6) identiques de grande longueur susceptibles d'être engagés chacun dans l'espace défini entre les molettes d'un même couple de molettes, lesdits couteaux étant disposés en avant de la machine et leur zône de coupe agissant dans le sens de défilement du câble, flèche F3, provoquant ainsi non pas leur pénétration excessive de l'enveloppe du câble à dénuder mais éventuellement une tendance à leur écartement, selon la flèche F4, l'un par rapport à l'autre tout en assurant correctement la coupe selon deux génératrices opposées.

Les couteaux, selon une caractéristique importante de l'invention, sont réalisés en tôle ayant reçue des traitements thermiques appropriés pour lui conférer une rigidité et dureté en particulier de la zône de coupe. Lesdits couteaux ont une section plate uniforme. Ils présentent un profil coudé avec deux points d'attache (6.1 - 6.2) et d'articulation pour les réglages en position et une zône constituant la partie active de coupe (6.3). Plus précisément, chaque couteau présente dans sa partie centrale correspondant à la zône de coudage, une ouverture (6.4) autorisant le positionnement d'une axe de liaison (7) associé à des moyens de réglage (8) en hauteur du couteau. Ce dernier présente dans sa partie arrière une ouverture (6.5) autorisant le positionnement d'un axe de liaison associé à des moyens de réglage (10) en position horizontale du couteau. Chaque couteau présente à l'avant un profil en forme de bec (6.6) orienté dans le sens de l'intérieur du profil coudé et présentant la partie active de coupe proprement dite. Il est prévu entre les faces en regard des parties actives formant bec des couteaux un angle de dépouille de valeur $\alpha$ approprié ouvert vers l'arrière de la machine du côté évacuation des câbles dénudés.

La partie active du couteau peut être affutée et compte tenu de la largeur de la partie en forme de bec, il est possible d'avoir une zône de coupe potentielle de plusieurs millimètres permettant ainsi, après affûtage nécessaire, une capacité d'utilisation accrue des couteaux par rapport à ceux connus de l'art antérieur.

Le couteau présente enfin un profil de dégagement (6.7) pour contourner l'axe de rotation des molettes.

De manière avantageuse, le plan de coupe défini par les parties actives des couteaux se situe dans l'axe diamétral vertical des molettes d'entraînement du câble à dénuder.

Il y a lieu maintenant de préciser les moyens de réglage en position des couteaux aussi bien leur écartement en fonction de la section du câble à dénuder que leur position en fonction du degré d'usure de la zône active de coupe.

Le bâti support (2) formant piètement comprend un socle vertical (11) avec des plans d'appui horizontaux recevant de manière classique les moyens rapportés (12) des couples de molettes et assurant leur préréglage en position en fonction de la section du câble à dénuder. Afin d'assurer le positionnement des couteaux, le montage étant identique pour le couteau inférieur et le couteau supérieur, il est prévu une vis de liaison et de commande (13) manoeuvrée par un volant (14), ladite vis étant guidée dans un mandrin (15) solidarisé par un montage flottant à une patte profilée (16) formée sur le socle support (11). L'extrémité (13.1) de la vis est associée à un bloc (17) lui-même monté fixement sur l'axe de liaison (7) introduit dans l'ouverture (6.4) du couteau. Le montage flottant précité entre le manchon et la patte profilée est obtenu à l'aide d'un tourillon (18) ou moyen équivalent, ceci pour permettre une légère variation angulaire de positionnement de la vis de manoeuvre, lorsque le couteau est déplacé horizontalement par les seconds moyens de réglage en fonction du degré d'usure de sa partie active.

Les seconds moyens de réglage sont ainsi conçus comme suit. A partir du socle d'appui dans un plan latéral est disposée une patte support (19) profilée. Ladite patte reçoit, dans sa partie inférieure, un arbre cannelé (20) à position fixe situé dans un plan parallèle au plan du couteau, en arrière de celui-ci. Cet arbre cannelé reçoit un manchon (21) pouvant coulisser. Ledit manchon reçoit latéralement un axe de liaison (9) introduit et fixé dans l'ouverture arrière (6.5) formée sur le couteau. Des moyens du type écrou (22) sont montés en bout de l'axe (3) ainsi que sur l'axe (7) pour permettre le démontage du couteau.

Par ailleurs, ladite patte profilée (19) reçoit dans sa partie supérieure et dans un plan au-dessus de l'arbre cannelé, une vis de liaison (23) fixe et tournant sur elle-même ; ladite vis est guidée et maintenue horizontalement par une plaque (24) disposée verticalement à partir du manchon (21). On comprend ainsi que l'actionnement de ladite vis de liaison (23) permet de faire varier en position le manchon (21) qui n'a qu'une liberté de déplacement selon l'arbre cannelé permettant d'avancer ou reculer le couteau. Ainsi, lorsque la partie active du couteau nécessite un réaffûtage, l'opérateur n'a aucune difficulté pour dégager le couteau après enlèvement des moyens de blocage (23). Après affûtage, le couteau est remis en position. L'opérateur peut alors par le réglage de la vis de liaison (23) positionner correctement en reculant le couteau de sa position précédente pour que sa partie active soit dans l'axe des molettes d'entraînement du câble.

Le réglage en position des couteaux après affûtage engendre un léger déplacement en retrait pour permettre les meilleures conditions de coupe. Il faut donc, par rapport aux premiers moyens de réglage en hauteur des couteaux, c'est-à-dire en profondeur de passe, qu'il y ait un montage flottant de leurs moyens de réglage tel que précédemment indiqué.

On a décrit le montage des moyens de réglage du couteau supérieur ; des moyens identiques sont prévus pour le couteau inférieur et les éléments support sont disposés par rapport à la partie inférieure du bâti et du socle.

Les avantages ressortent bien de l'invention. On souligne en particulier :
- la nouvelle conception du couteau de fabrication simple tant par le matériau le constituant que par ses formes. Il peu être réalisé par une simple opération d'emboutissage à partir d'un même gabarit pour le couteau supérieur et le couteau inférieur ;

Le montage de chaque couteau est aisé et l'affûtage facile ;
- de par sa forme, chaque couteau a une durée de vie plus importante, et son éventuel remplacement n'est pas couteux et difficile à mettre en oeuvre. De par son profil coudé, et sa grande longueur, la rigidité est accrue et source de fiabilité.

Le positionnement différent des couteaux par rapport à l'art antérieur, permet une meilleure productivité de la machine et évite tout bourrage lors de l'évacuation du câble dénudé et de son enveloppe.

## Revendications

-1- Dispositif de coupe perfectionné pour machine à dénuder les câbles, ladite machine comprenant à partir d'un bâti support des moyens supports (3) de couples de molettes (5) d'entraînement des câbles (C), des moyens de guidage (4) du câble, des moyens de réglage d'écartement (12) en position des molettes (5) en fonction de la section du câble à dénuder, des moyens de coupe agissant sur des génératrices opposées du câble, et étant disposés entre les molettes, des moyens de réglage en position des outils en fonction de la profondeur de passe à exécuter, ledit dispositif étant caractérisé en ce qu'il comprend deux couteaux plats profilés et coudés (6), de grande longueur, disposés en avant de la machine, leur zône de coupe agissant dans le sens de défilement du câble, lesdits couteaux étant sollicités en écartement l'un par rapport à l'autre lors du défilement du câble, lesdits couteaux étant associés à des moyens de réglage en hauteur et à des moyens de réglage dans le plan horizontal.

-2- Dispositif de coupe selon la revendication 1, caractérisé en ce que chaque couteau (6) présentant un profil coudé comprend deux points d'attache et d'articulation (6.1 - 6.2) et une zône constituant la partie active de coupe (6.3) ; un premier point d'attache (2.1) étant situé dans la partie centrale correspondant à la zône de coudage et comprenant une ouverture (6.4) autorisant le positionnement d'un moyen de liaison (7) associé aux moyens de réglage (5) en hauteur du couteau ; un second point d'attache étant situé dans la partie arrière du couteau et comprenant une ouverture (6.5) autorisant le positionnement d'un moyen de liaison (9) associé à des moyens de réglage (10) en position horizontale du couteau.

-3- Dispositif selon l'une quelconque des revendications 1 et 2, caractérisé en ce que chaque couteau présente dans sa partie avant un profil en forme de bec (6.6) orienté dans le sens de l'intérieur du profil coudé, avec une partie active de coupe ; les faces en regard des parties actives formant becs définissant entre elles un angle de dépouille α ouvert vers l'arrière de la machine.

-4- Dispositif selon l'une quelconque des revendications 1, 2 et 3, caractérisé en ce que chaque couteau présente un profil de dégagement (6,7) contournant l'axe de rotation des molettes d'entraînement du câble.

-5- Dispositif selon les revendications 1 et 2 ensemble, caractérisé en ce que les moyens de réglage en hauteur de chaque couteau (6) comprennent à partir de la structure du bâti (2) une vis de liaison et de commande (13) manoeuvrée par un moyen à commande manuelle (14), ladite vis étant guidée dans un manchon (15) solidarisé par un montage flottant à une patte (16) solidarisée à la structure du bâti ; l'extrémité (13.1) de ladite vis étant associée par un moyen (17) au moyen de liaison (7) de fixation du couteau (8).

-6- Dispositif selon la revendication 5, caractérisé en ce que le montage flottant entre le manchon (15) et la patte (16) associée à la structure du bâti est obtenue à l'aide d'un moyen (18) autorisant une légère variation angulaire en position de la vis de manoeuvre en fonction du réglage en position horizontale dudit couteau.

-7- Dispositif selon les revendications 1 et 2 ensemble, caractérisé en ce que les moyens de réglage horizontal de chaque couteau comprennent à partir de la structure porteuse du bâti (2) une patte support (19) profilée recevant dans sa partie inférieure un moyen de guidage (20) en translation d'un manchon (21) disposé dans un plan parrallèle au plan du couteau en regard et étant associé à ce dernier par un moyen de liaison (9) ; ladite patte (19) recevant dans sa partie supérieure une vis de liaison et de commande (23) parallèle au moyen de guidage (20) et maintenu en position par une plaque (24) associée audit manchon (21), l'actionnement de ladite vis assurant le déplacement du manchon (21) sur le moyen de guidage (20) et celui du couteau (6) qui y est associé.

-8- Dispositif selon la revendication 7, caractérisé en ce que le moyen de guidage (20) est un arbre cannelé.

-9- Dispositif selon les revendications 5 et 7 ensemble, caractérisé en ce que les moyens de liaison (7) et (9) du couteau aux moyens de réglage en hauteur et en position horizontale reçoivent des moyens de blocage et verrouillage autorisant l'enlèvement du couteau.

-10- Dispositif selon l'une quelconque des revendications 5, 6, 7, 8 et 9, caractérisé en ce que les couteaux supérieur et inférieur sont assujettis à des moyens de réglage en hauteur et en position horizontale identique.

FIG.1

FIG.2

FIG.6

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4534254 (BUDZICH ET AL.)<br>* colonne 3, ligne 12 - colonne 7, ligne 51; figures 1-14 *<br>----- | 1, 5 | H01B15/00 |

DOMAINES TECHNIQUES RECHERCHES (Int. Cl.5)

H01B
H02G

Le présent rapport a été établi pour toutes les revendications

| Lieu de la recherche | Date d'achèvement de la recherche | Examinateur |
|---|---|---|
| LA HAYE | 16 JANVIER 1990 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0402)